# EUROPÄISCHE PATENTSCHRIFT

(11) **EP 1 828 670 B1**
(45) Veröffentlichungstag und Bekanntmachung des Hinweises auf die Patenterteilung: **04.09.2019**
(21) Anmeldenummer: 05823626.6
(22) Anmeldetag: 19.12.2005
(51) Int. Cl.: F17D 5/02, F17D 5/04, G01N 3/28

(54) **VERFAHREN ZUR RECHNERGESTÜTZTEN BESTIMMUNG EINER THEORETISCH VERBLEIBENDEN LEBENSDAUER EINER AUSTAUSCHBAREN BATTERIE**
METHOD FOR THE COMPUTER-AIDED DETERMINATION OF A THEORETICALLY REMAINING LIFETIME OF AN EXCHANGEABLE BATTERY
PROCEDE POUR LA DETERMINATION ASSISTEE PAR ORDINATEUR D'UNE DUREE DE VIE THEORIQUEMENT RESTANTE D'UNE PILE ECHANGEABLE

(30) Priorität: 23.12.2004 DE 102004063471
(43) Veröffentlichungstag der Anmeldung: 05.09.2007
(73) Patentinhaber: Endress+Hauser S.A.S., 68331 Huningue Cedex (FR)
(72) Erfinder: HANTZER, Fabien, F- 68110 Illzach (FR); TRACOGNA, Jean-franco, F-68270 Ruelisheim (FR); KNECHT, Christian, F-68680 Kembs (FR); ENDRESS, Urs, CH-4144 Arlesheim (CH)
(74) Vertreter: Andres, Angelika Maria
(86) Internationale Anmeldenummer: PCT/EP2005/056914
(87) Internationale Veröffentlichungsnummer: WO 2006/069930

(56) Entgegenhaltungen:
- EP-A- 0 955 531
- EP-A- 1 168 115
- EP-A- 1 603 064
- EP-A2- 1 278 047
- WO-A2-2005/055017
- US-A- 3 690 150
- US-A- 4 361 030
- US-A- 4 727 748
- US-A- 5 343 737
- US-A- 5 708 195
- US-A1- 2004 069 345
- US-B1- 6 439 260
- US-B1- 6 535 827
- US-B2- 6 720 882

## Beschreibung

Die Erfindung betrifft ein Verfahren zur rechnergestützten Bestimmung einer theoretisch verbleibenden Lebensdauer einer austauschbaren Batterie für wenigstens ein Durchflussmessgerät in einem Leitungsnetzwerk zur Versorgung mit Wasser oder Gas und/oder zum Abtransport von Brauchwasser mit einer hierarchischen Struktur.

Derartige Leitungsnetzwerke werden beispielsweise zur Versorgung von Gemeinden oder anderen größeren Ansiedlungen mit Wasser oder Gas eingesetzt, wie auch zur Entsorgung des Brauchwassers. Solche Leitungsnetzwerke sind üblicherweise im Untergrund installiert, so daß eine Leckage in einer Leitung des Leitungsnetzwerkes nur schwierig zu entdecken ist. Es ist bekannt, daß beispielsweise Wasser- bzw. Gasversorgungsunternehmen, die solche Leitungsnetzwerke betreiben, Verluste durch Leckagen erleiden, weil sie große Mühe haben, diese Leckagen in angemessener Zeit zu entdecken, insbesondere dann, wenn es sich um großflächige Leitungsnetzwerke handelt, kaum Messgeräte im Leitungsnetzwerk installiert sind und deren Verlässlichkeit gering bzw. Funktion nicht verlässlich feststellbar ist.

Ferner muss die ausreichende Versorgung des Durchflussmessgeräts mit elektrischer Energie in einem derartigen Leitungsnetzwerk sichergestellt sein. Hierzu kann die Lebensdauer mit einem Verfahren zur rechnergestützten Bestimmung einer theoretisch verbleibenden Lebensdauer der Batterie bestimmt werden. In der EP 1 278 047 A2 wird als ein Einflussfaktor auf die Lebensdauer der Batterie die Abtastrate des Durchflussmessgeräts angepasst. Tatsächlich beeinflussen eine Vielzahl von unterschiedlichen Einflussfaktoren die Lebensdauer der Batterie

Es ist daher Aufgabe der Erfindung, eine verbesserte Bestimmung der theoretisch verbleibenden Lebensdauer einer Batterie eines Durchflussmessgeräts in einem Leitungsnetzwerk anzugeben.

Die Aufgabe wird gelöst durch ein Verfahren zur rechnergestützten Bestimmung einer theoretisch verbleibenden Lebensdauer einer austauschbaren Batterie wobei in einem Leitungsnetz zur Versorgung mit Wasser oder Gas und/oder zum Abtransport von Brauchwasser, welches eine hierarchische Struktur aus Leitungszweigen aus Leitungen aufweist, mehrere Leitungszweige mit jeweils wenigstens einem als Stand-Alone-Gerät ausgestalten Durchflussmessgerät ausgestattet sind, die zu einem Master-Slave-Netz verbunden sind und drahtlos miteinander kommunizieren, wobei in dem Leitungsnetz wenigstens ein Durchflussmessgerät in einem hierarchisch übergeordneten Leitungszweig als Master-Durchflussmessgerät sowie mehrere andere Durchflussmessgeräte in einem hierarchisch nachgeordneten Leitungszweig als Slave-Durchflussmessgeräte ausgestaltet sind, die von ihnen ermittelte Messwerte an das Master-Durchflussmessgerät melden wobei wenigstens die Slave-Durchflussmessgeräte von jeweils einer dem Salve-Durchflussmessgerät zugeordneten und damit verbundenen Batterie mit Energie versorgt werden, und wobei das Verfahren für wenigstens eines der Slave-Durchflussmessgeräte in dem Leitungsnetz durchgeführt wird und folgende Verfahrensschritte umfasst, die von einem in einer Kommunikations- und Versorgungseinheit des betreffenden Slaves-Durchflussmessgeräts integrierten und damit verbundenen Rechner durchgeführt werden
- Definieren einer Matrix von Einflussfaktoren, die eine theoretische Lebensdauer der Batterie beeinflussen, wobei als ein Einflussfaktor ein in der Batterie gemessener Spannungsabfall pro Zeit berücksichtigt wird und wobei es sich bei den Einflussfaktoren insbesondere um die Einschalthäufigkeit des betreffenden Slave-Durchflussmessgerätes, seinen Messzyklus, seine Betriebszeit, Druck und Temperatur der Umgebung handelt;
- vom Rechner gesteuerte Erfassung der Einflussfaktoren von der Installation der Batterie an bis zu ihrem Versagen oder Ende zu vorgegebenen Zeitpunkten in Abhängigkeit einer bis dahin vergangenen Betriebszeit des betreffenden Slave-Durchflussmessgerätes;
- vom Rechner durchgeführte Bestimmung der theoretisch verbleibenden Lebensdauer mithilfe der Matrix, unter Berücksichtigung aller bisher erfassten Einflussfaktoren und der abgelaufenen Betriebszeit;
- wobei der aktuelle gemessene Spannungsabfall pro Zeit mit einem theoretisch berechneten Wert für die betreffende Konfiguration des Slave-Durchflussmessgeräts verglichen und bei Überschreiten einer vorgegebenen Abweichung ein Alarmsignal generiert wird und
- wobei bei Unterschreiten einer vorbestimmten verbleibenden theoretischen Lebensdauer ein Signal generiert wird, das auf einen erforderlichen Austausch der Batterie hinweist.

In besonderer Ausgestaltung dieses Verfahrens wird die theoretisch verbleibende Lebensdauer der Batterie bei jeder Änderung von Messzyklen des Durchflussmessgerätes bestimmt oder periodisch, sofern zwischenzeitlich keine Bestimmung aufgrund geänderter Messzyklen des Durchflussmessgerätes stattgefunden hat.

Wieder eine andere Ausführungsform des beschriebenen Verfahren nach der Erfindung sieht zur Festlegung und Gestaltung einer theoretisch verbleibenden Lebensdauer folgende Verfahrensschritte vor:
- der Rechner ermittelt verschiedene theoretisch verbleibende Lebensdauern für verschiedene Wertepaarungen von Einflussfaktoren;
- die verschiedenen theoretisch verbleibenden Lebensdauern werden zusammen mit den verschiedenen Wertepaarungen von Einflussfaktoren einem Benutzer auf einer Anzeigevorrichtung des Rechners angezeigt, wobei eine Änderung der Werte der Wertepaarungen bzw. der Einflussfaktoren auf einer Eingabevorrichtung des Rechners durch den Benutzer ermöglicht wird;
- nach jeder Eingabe bzw. Änderung der Wertepaarungen von Einflussfaktoren durch den Benutzer ermittelt der Rechner eine neue den geänderten Werten entsprechende theoretisch verbleibende Lebensdauer und stellt sie auf der Anzeigevorrichtung des Rechners dar.

Noch wieder eine andere Ausführungsform des beschriebenen Verfahren nach der Erfindung betrifft eine Verwendung jener Einflussfaktoren, die einen gewünschten Messzyklus des Durchflussmessgerätes oder der Durchflussmessgeräte betreffen, innerhalb der Wertepaarung von Einflussfaktoren, die der Benutzer letztlich auswählt, zur Konfiguration bzw. Parametrisierung des oder der Durchflussmessgeräte.

Eine weitere Ausführungsform des beschriebenen Verfahren nach der Erfindung sieht vor, daß eine Festlegung und Gestaltung einer theoretisch verbleibenden Lebensdauer der Batterie des betreffenden Durchflussmessgerätes oder mehrerer Durchflussmessgeräte periodisch durchgeführt, wobei einem Benutzer jeweils die zur bestehenden Konfiguration bzw. Parametrisierung des oder der Durchflussmessgeräte ermittelte theoretisch verbleibenden Lebensdauer angezeigt, ihm die Möglichkeit zur Änderung der Konfiguration bzw. Parametrisierung eingeräumt und die jeweils aus einer Änderung der Konfiguration bzw. Parametrisierung resultierende geänderte theoretisch verbleibenden Lebensdauer der Batterie verdeutlicht wird.

Die Erfindung ist in der beigefügten Zeichnung dargestellt, die die Fig. 1 bis 8 umfaßt. Die Erfindung wird nachfolgend genauer erläutert und beschrieben, wobei auf die in der Zeichnung dargestellten Ausführungsbeispiele aus dem Stand der Technik und der Erfindung verwiesen wird. Dabei zeigen:
- Fig. 1: eine schematische Darstellung eines Leitungsnetzes aus dem Stand der Technik zur Wasserversorgung;
- Fig. 2: eine schematische Darstellung einer ersten Ausführungsform eines Durchflussmessgerätes nach der Erfindung mit einer Kommunikationsvorrichtung;
- Fig. 3: eine schematische Darstellung einer Elektronik einer weiteren Ausführungsform eines Durchflussmessgerätes nach der Erfindung;
- Fig. 4: eine schematische Darstellung eines Teils eines Leitungsnetzes aus dem Stand der Technik zur Wasserversorgung;
- Fig. 5: ein erstes Diagramm zum Wasserverbrauch im Leitungsnetz;
- Fig. 6: ein zweites Diagramm zum Wasserverbrauch im Leitungsnetz;
- Fig. 7: eine schematische Darstellung eines Ausschnitts des Leitungsnetzes nach Fig. 4; und
- Fig. 8: eine schematische Darstellung eines Leitungsstranges mit Leckage im Leitungsnetz und Vorrichtung zu deren Detektion.

Zur Vereinfachung sind in der Zeichnung gleiche Elemente, Bauteile, Module oder Baugruppen mit gleichen Bezugszeichen bezeichnet, sofern eine Verwechselung ausgeschlossen ist.

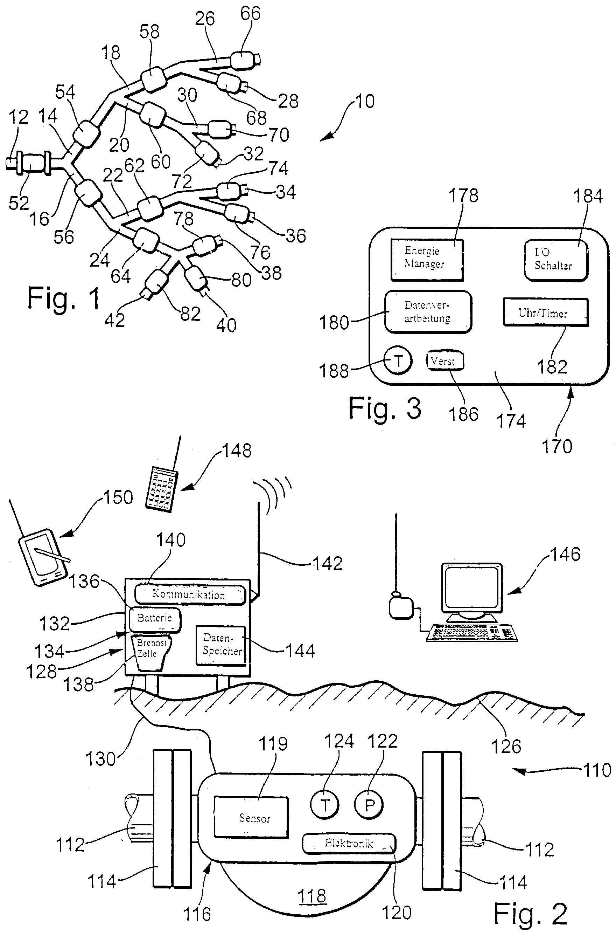

In Fig. 1 ist ein Leitungsnetz schematisch dargestellt.
Dieses Leitungsnetz 10 dient zur Wasserversorgung von Industriebetrieben und/oder Häusern, also Haushalten. Wie noch genauer erklärt wird, eignet sich die Erfindung für solche Leitungsnetze, die zur Versorgung mit Wasser oder Gas als auch oder zum Abtransport von Brauchwasser verwendet werden. Insofern umfaßt der hier benutzte Begriff "Leitungsnetz" all die genannten Verwendungen, falls nicht ausdrücklich zwischen Wasser- und Gasversorgung bzw. Wasserentsorgung unterschieden wird. Derartige Leitungsnetze sind üblicherweise unterirdisch verlegt.

Ein solches Leitungsnetz umfaßt nicht nur eine einzelne Leitung, genauer: eine einzelne Rohrleitung, sondern setzt sich aus vielen Leitungen zusammen und weist eine hierarchische Struktur auf. Leitungen einer Ordnung bilden mit den aus ihnen verzweigenden Leitungen nächstniederer Ordnung Leitungszweige, wobei die meisten Leitungen jeweils mit einem Durchflussmessgerät ausgestattet sind. Bei dem hier dargestellten Ausführungsbeispiel des Leitungsnetzes 10 ist dies anhand weniger Leitungen unterschiedlicher Subordnungen veranschaulicht. Die Fig. 1 dient zur Veranschaulichung des prinzipiellen Aufbaus eines Leitungsnetzes. Aus Gründen der Übersichtlichkeit ist daher nur einen Teil des Leitungsnetzes schematische dargestellt. In der Praxis können Leitungsnetze, die zur Wasser- oder Gasversorgung oder auch zum Abtransport von Brauchwasser dienen, sehr große Ausdehnungen annehmen. Einzelne Leitung können durchaus mehrere Kilometer lang sein.

Von einer übergeordneten Leitung, die hier als Hauptleitung 12 bezeichnet ist, zweigen beispielsweise, wie hier stellvertretend dargestellt, untergeordnete, also nachgeschaltete Leitungen ab, betrachtet man eine Durchflussrichtung von der Hauptleitung zu untergeordneten Leitungen hin. Die Hauptleitung 12 teilt sich in eine erste Leitung 14 erster Subordnung und eine zweite Leitung 16 erster Subordnung auf. Von der ersten Leitung 14 erster Subordnung zweigen wiederum eine erste Leitung 18 zweiter Subordnung und eine zweite Leitung 20 zweiter Subordnung ab. Die zweite Leitung 16 erster Subordnung teilt sich wiederum in eine dritte Leitung 22 zweiter Subordnung und eine vierte Leitung 24 zweiter Subordnung.

Die erste Leitung 18 zweiter Subordnung teilt sich auf in eine erste Leitung 26 dritter Subordnung und eine zweite Leitung 28 dritter Subordnung. Die zweite Leitung 20 zweiter Subordnung teilt sich wiederum in eine dritte Leitung 30 dritter Subordnung und eine vierte Leitung 32 dritter Subordnung. Die dritte 22 Leitung zweiter Subordnung verzweigt sich in eine fünfte Leitung 34 dritter Subordnung und eine sechste Leitung 36 dritter Subordnung, während die vierte Leitung 24 zweiter Subordnung sich in eine siebte Leitung 38 dritter Subordnung, eine achte Leitung 40 dritter Subordnung und eine neunte Leitung 42 dritter Subordnung aufteilt.

Zur Überwachung der Fließvorgänge im Leitungsnetzes 10 ist in der Hauptleitung 12 ein Durchflussmessgerät 52 vorgesehen. In der ersten Leitung 14 erster Subordnung ist ein Durchflussmessgerät 54 und in der zweiten Leitung 16 erster Subordnung ist ein weiteres Durchflussmessgerät 56 vorgesehen. Ebenso ist ein Durchflussmessgerät 58 in der ersten Leitung 18 zweiter Subordnung und ein Durchflussmessgerät 60 in der zweiten Leitung 20 zweiter Subordnung angeordnet. In der dritten Leitung 22 zweiter Subordnung ist ein Durchflussmessgerät 62 und in der vierten Leitung 24 zweiter Subordnung ein Durchflussmessgerät 64 angeordnet. Weiterhin befinden sich ein Durchflussmessgerät 66 in der ersten Leitung 26 dritter Subordnung, ein Durchflussmessgerät 68 in der zweiten Leitung 28 dritter Subordnung, ein Durchflussmessgerät 70 in der dritten Leitung 30 dritter Subordnung, ein Durchflussmessgerät 72 in der vierten Leitung 32 dritter Subordnung, ein Durchflussmessgerät 74 in der fünften Leitung 34 dritter Subordnung, ein Durchflussmessgerät 76 in der sechsten Leitung 36 dritter Subordnung, ein Durchflussmessgerät 78 in der siebten Leitung 38 dritter Subordnung, ein Durchflussmessgerät 80 in der achten Leitung 40 dritter Subordnung und ein Durchflussmessgerät 82 in der neunten Leitung 42 dritter Subordnung.

Die Durchflussmessgeräte 54 - 82 sind Stand-Alone-Geräte, das heißt, daß sie eine eigene, autarke Energieversorgung aufweisen. Das Durchflussmessgerät 52 in der Hauptleitung 12 kann ebenfalls ein Stand-Alone-Gerät sein, dies ist aber für die Erfindung nicht unbedingt erforderlich nicht. Wie später noch erklärt wird, sind alle Durchflussmessgeräte 52 - 82 in der Lage miteinander drahtlos zu kommunizieren, vorzugsweise bidirektional, und zu einem Master-Slave-Netz verbunden. In diesem hierarchisch organisierten Master-Slave-Netz fungiert das Durchflussmessgerät 52 als Master-Durchflussmessgerät in einer übergeordneten Leitung und die anderen Durchflussmessgeräte 54 - 82 in unter- bzw. nachgeordneten Leitungszweigen als Slave-Durchflussmessgeräte. Das bedeutet, daß die Slave- Durchflussmessgeräte 54 - 82 einen von ihnen in ihrer jeweiligen Leitung ermittelten Durchflussmesswert an das Master-Durchflussmessgerät 52 melden. Vorzugsweise sind die Slave- Durchflussmessgeräte 54 - 82 mit einem Sensor ausgestattet, der es ermöglicht neben einem Durchfluss in der jeweiligen Leitung auch eine dort herrschende Durchflussrichtung zu ermitteln. Diese Durchflussrichtung wird zusammen mit dem Durchflussmesswert und einer entsprechenden Geräte-Kennung von jedem Slave- Durchflussmessgerät 54 - 82 drahtlos an das Master-Durchflussmessgerät 52 gemeldet.

Sinnvollerweise sind jedoch mehrere Durchflussmessgeräte in Leitungen der ersten bzw. zweiten Subordnung von ihrer technischen Auslegung her ebenfalls in der Lage, bei einem Ausfall des eigentlichen Master-Durchflussmessgerätes an dessen Stelle zu treten und als Master-Durchflussmessgerät zu arbeiten.

Im Master-Durchflussmessgerät 52 werden aus den von den Slave-Durchflussmessgeräten 54 - 82 eines untergeordneten Leitungszweiges übermittelten einzelnen Durchflussmesswerten ein Summenwert gebildet und mit einem Durchflussmesswert eines Durchflussmessgerätes im jeweils übergeordneten Leitungszweig verglichen. Bei dem beispielhaft in Fig. 1 dargestellten Leitungsnetz 10 bestehen dazu folgende Relationen, wenn vorausgesetzt wird, daß das Master-Durchflussmessgerät 52 intakt und das Leitungsnetz 10 ohne Leckage oder sonstige Verluste sind:
- Die Summe der von der Durchflussmessgeräten 66 und 68 gemessenen Durchflussmesswerte entspricht dem vom Durchflussmessgerät 58 gemessenen Durchflussmesswert.
- Die Summe der von der Durchflussmessgeräten 70 und 72 gemessenen Durchflussmesswerte entspricht dem vom Durchflussmessgerät 60 gemessenen Durchflussmesswert.
- Die Summe der von der Durchflussmessgeräten 74 und 76 gemessenen Durchflussmesswerte entspricht dem vom Durchflussmessgerät 62 gemessenen Durchflussmesswert.
- Die Summe der von der Durchflussmessgeräten 78, 80 und 82 gemessenen Durchflussmesswerte entspricht dem vom Durchflussmessgerät 64 gemessenen Durchflussmesswert.
- Die Summe der von der Durchflussmessgeräten 58 und 60 gemessenen Durchflussmesswerte entspricht dem vom Durchflussmessgerät 54 gemessenen Durchflussmesswert.
- Die Summe der von der Durchflussmessgeräten 62 und 64 gemessenen Durchflussmesswerte entspricht dem vom Durchflussmessgerät 56 gemessenen Durchflussmesswert.
- Die Summe der von der Durchflussmessgeräten 54 und 56 gemessenen Durchflussmesswerte entspricht dem vom Durchflussmessgerät 52 gemessenen Durchflussmesswert.

Für ein größeres Leitungsnetz als in Fig. 1 beispielhaft dargestellt ist, sind die obigen Relationen und Zusammenhänge entsprechend zu ergänzen.

Diese Relationen erlauben es festzustellen, ob in einer Leitung ab der ersten Subordnung ein Verlust auftritt, indem die Durchflussmessungen in einer untergeordneten Leitung immer durch Vergleich mit der Durchflussmessung in der unmittelbar dazu übergeordneten Leitung überwacht werden. Wenn bei einer Durchflussrichtung von der Hauptleitung 12 zu den untergeordneten Leitungen beispielsweise in der sechsten Leitung 36 dritter Subordnung vor dem dortigen Durchflussmessgerät 76 eine Leckage sein sollte, so stimmt die Summe der in den Durchflussmessgeräten 74 und 76 gemessenen Durchflussmesswerte nicht mehr mit dem im Durchflussmessgerät 62 in der dritte Leitung 22 zweiter Subordnung gemessenen Durchflussmesswert überein. Der im Durchflussmessgerät 62 gemessene Durchflussmesswert ist größer als die Summe der Durchflussmesswerte, die in den Durchflussmessgeräten 74 und 76 gemessenen werden, da das Durchflussmessgerät 76 wegen der Leckage einen zu kleinen Durchfluss misst. Ähnliche Zusammenhänge ergeben sich bei Leckagen oder sonstigen Verlusten natürlich auch für die anderen Messwerte in anderen Leitungen.

Die beschriebene Summenbildung von Durchflussmesswerten in den untergeordneten Leitungen und der jeweilige Vergleich mit dem Durchflussmesswert der zugehörenden Leitung nächsthöherer Ordnung werden üblicherweise im Master-Durchflussmessgerät 52 vorgenommen. Bei Leitungsnetzen zur Wasserversorgung von Industrie und/oder Haushalten meldet das Durchflussmessgerät 52 in der Hauptleitung 12 die von ihm gemessenen Durchflussmesswerte an eine Messwarte, die auch eine zentrale Station oder an eine sonstige separate Abrechnungsstelle sein kann. Bei Verdacht auf eine Leckage im betrachteten Leitungsnetz erzeugt das Master-Durchflussmessgerät 52 ein Alarmsignal und meldet dies an die Messwarte bzw. an die Abrechnungsstelle. Im Falle eines Alarms kann von der Messwarte aus ein Suchtrupp oder eine einzelne Person geschickt werden, um die Leckage im Leitungsnetz zu finden und abzudichten bzw. zu reparieren. Wie bereits oben erwähnt, sind Leitungsnetze der beschriebenen Art häufig sehr ausgedehnt. Obwohl eine Detektion einer Leckage in einem Leitungsnetz zunächst für einen Leitungszweig bestimmt werden kann, ist es mit einer anderen Ausführungsform auch möglich, den genauen Ort der Leckage durch eine zusätzliche Messung zu bestimmen. Dies wird hier später noch genauer erklärt und erläutert.

Für eine Abrechnung der von den Slave-Durchflussmessgeräten ermittelten Durchflusswerte ist es sinnvoll, wenigstens ein Durchflussmessgerät als eichfähiges Gerät vorzusehen. Vorzugsweise sind jedoch mehrere eichfähige Durchflussmessgeräte zu installieren und zwar überall dort, wo wichtige Leitungsverzweigungen im Leitungsnetz 10 zu finden sind. So sind beispielsweise in dem in Fig 1 veranschaulichten Leitungsnetz 10 das Master-Durchflussmessgerät 52 und die Slave-Durchflussmessgeräte 66-80 eichfähige Durchflussmessgeräte, die bevorzugt auch direkt an Ort und Stelle ihrer Installation kalibriert werden können.

Leitungsnetze der beschriebenen Art werden üblicherweise von größeren Betreiber- und/oder Wasserversorgungsfirmen oder Wasserentsorgungsfirmen betrieben, die ihre Dienstleistungen, die gelieferte bzw. entsorgte Menge Wasser und die Bereitstellung der Leitungen in Rechnung stellen. Um in diesem Zusammenhang die gelieferte bzw. entsorgte Menge Wasser für eine Anrechnung zu erfassen, ist eine zentralen Station als Abrechnungsstelle vorgesehen, an die die einzelnen Master-Durchflussmessgeräte die von ihnen ermittelten Durchflussmesswerte übermitteln.

In Fig. 2 ist eine besondere Ausführungsform eines Durchflussmessgerätes nach der Erfindung schematisch dargestellt, wie es beispielsweise als Slave-Durchflussmessgerät 54 - 82 (siehe dazu Fig. 1) verwendet wird. Ein solches Durchflussmessgerät 110 ist in eine Leitung 112 des Leitungsnetzwerkes 10 (siehe dazu Fig. 1) eingebaut mittels zweier Flansche 114. In einem Gehäuse 116 des Durchflussmessgerätes 110 (siehe dazu auch Fig. 1) ist ein Messrohr 118 mit wenigstens einem Durchfluss-Sensor 119 untergebracht. Eine Messelektronik 120 erzeugt und empfängt Messsignale, wertet sie in Bezug auf den gewünschten Messwert aus und leitet die Durchflussmesswerte zur Übertragung an ein Master-Durchflussmessgerät weiter.

Vorzugsweise sind im Gehäuse 116 zusätzlich auch ein Drucksensor 122 und ein Temperatursensor 124 angeordnet. Mit dem ein Drucksensor 122 kann ein in der hier betrachteten Leitung 112 herrschender Druck erfaßt werden. Der Temperatursensor 124 dient zur Erfassung einer Temperatur in der Leitung 112 oder im Gehäuse 116 des Durchflussmessgerätes 110.Leitungen 110 der betrachteten Art sind üblicherweise unterirdisch verlegt. Das Durchflussmessgerät 110 ist, wie beschrieben in die Leitung 112 integriert und damit ebenfalls unter einer Erdoberfläche 126 angeordnet.

Das Durchflussmessgerät 110 ist elektrisch mit einer Kommunikations- und Versorgungseinheit 128 über wenigstens eine Leitung 130 verbunden. Die Kommunikations- und Versorgungseinheit 128 befindet sich bei dem hier dargestellten Ausführungsbeispiel oberhalb der Erdoberfläche 126 und über oder sehr nahe beim Durchflussmessgerät 110. In einem Gehäuse 132 der Kommunikations- und Versorgungseinheit 128 ist eine Energieversorgung 134 untergebracht, die zur Versorgung der in des Durchflussmessgerätes 110 und der elektrischen bzw. elektronischen Einheiten in der Kommunikations- und Versorgungseinheit 128 selbst dient. Die Energieversorgung 134 umfaßt nach der Erfindung eine oder mehrere Batterien 136.

Statt der Batterie bzw. der Batterien 136 kann jedoch auch eine Brennstoffzelle 138 verwendet werden, die in der Darstellung der Fig. 2 strichliert veranschaulicht ist. Es ist auch denkbar, das Gehäuse 132 der Kommunikations- und Versorgungseinheit 128 mit Solarzellen auszustatten, so daß bei entsprechender Sonneneinstrahlung das Durchflussmessgerät 110 und die Kommunikations- und Versorgungseinheit 128 versorgt und/oder die die Batterie 134 bzw. die Batterien aufgeladen werden können.

Eine Kommunikations-Elektronik 140 im Gehäuse 132 der Kommunikations- und Versorgungseinheit 128, die mit einer Antenne 142 verbunden ist, dient zur Kommunikation mit Kommunikations- und Versorgungseinheiten anderer Durchflussmessgeräte. Beispielsweise werden auf diese Weise die von Slave-Durchflussmessgeräten 54 - 82 im Leitungsnetzwerk 10 (siehe auch Fig. 1) gemessenen Daten an das Master-Durchflussmessgerät 52 übertragen. Die drahtlose Kommunikation mittels der Antenne 142 ermöglicht darüber hinaus auch eine Kommunikation des betreffenden Durchflussmessgerätes 110 mit anderen zur drahtlosen Kommunikation fähigen Geräten, wie zum Beispiel einem Personal Computer ("PC") 146, gegebenenfalls einem Notebook, einem sogenannten "Handheld"-Bediengerät 148, wie sie vielfach in industriellen Anlagen eingesetzt werden, und einem sogenannten Personal Digital Assistent ("PDA") 150. Die Kommunikations- und Versorgungseinheit 128 kann daher Daten von anderen Durchflussmessgeräten, dem PC, dem PDA oder dem Handheld-Bediengerät 148 empfangen oder Daten an diese senden. So ist es beispielsweise auch möglich, das Durchflussmessgerät 110 über seine Kommunikations- und Versorgungseinheit 128 mittels eines der zuletzt genannten Geräte zu parametrisieren oder Alarmmeldungen vom Durchflussmessgerät 110 zu empfangen.

In der Kommunikations- und Versorgungseinheit 128 ist vorzugsweise auch ein sogenannter "Daten-Logger" 144 im Sinne einer Speichereinheit vorgesehen, auf der sowohl Messdaten als auch Daten über den Zustand des Durchflussmessgerätes 110 und/oder der Kommunikations- und Versorgungseinheit 128 gespeichert werden können. Daten-Logger 144 dieser Art, besonders wenn sie austauschbar bzw. aus der Kommunikations- und Versorgungseinheit 128 entnehmbar sind, haben den Vorteil, daß von ihnen die gespeicherten Daten beliebig ausgelesen werden können, selbst dann, wenn die Kommunikations- und Versorgungseinheit 128 aus irgendeinem Grund ausfallen sollte. Aufgrund der oben bereits erwähnten großen Ausdehnung des beschriebenen Leitungsnetzes 10 (siehe Fig. 1) ist jedes Slave-Durchflussmessgerät vorzugsweise mit einer eigenen Energieversorgung 128 ausgerüstet.

Fig. 3 ist eine schematische Darstellung einer Elektronik einer weiteren Ausführungsform für ein Durchflussmessgerät nach der Erfindung. Diese Elektronik, die verschiedene in Fig. 3 beispielhaft dargestellte Module umfaßt, befindet sich vorzugsweise in einer Kommunikations- und Versorgungseinheit 170, genauer gesagt: in einem Gehäuse 174 der Kommunikations- und Versorgungseinheit 170. Eine Energiemanager-Elektronikschaltung 178 überwacht laufend oder auf Anfrage durch ein Master-Durchflussmessgerät 52 (siehe Fig. 1) den Zustand der Energieversorgung 134, also der Batterie(n) 136 auf verbleibende Lebensdauer unter den momentan herrschenden Bedingungen, wie beispielsweise Messzyklen, Umgebungstemperatur etc. Wenn, wie bereits oben zur Ausführungsform nach Fig. 2 beschrieben, das Gehäuse 174 der Kommunikations- und Versorgungseinheit 170 mit Solarzellen ausgestattet ist, kontrolliert die Energiemanager-Elektronikschaltung 178 die Versorgung der und des Durchflussmessgerät 110 (siehe Fig. 2) und gegebenenfalls einen Ladevorgang für aufladbare Batterien 136. Bei dem in Fig. 3 dargestellten Ausführungsbeispiel ist auch eine Datenverabeitungs-Einheit 180 vorgesehen. Diese Datenverarbeitungs-Einheit 180 kann die Aufgaben der Auswerte-Elektronik 120 im Durchflussmessgerät 110 (siehe Fig. 2) übernehmen und an dessen Stelle treten. Für den Fall, daß auch bei der in Fig. 3 dargestellten Kommunikations- und Versorgungseinheit 170 ein Daten-Logger vorgesehen sein soll, der dem Daten-Logger 144 nach Fig. 2 entspricht, aber zur Vereinfachung in Fig. 3 nicht dargestellt ist, kontrolliert die Datenverarbeitungs-Einheit 180 welche Daten dort gespeichert oder - bei einem möglichen Überlauf der Speichereinheit - gelöscht werden.

Neben dem Daten-Logger ist noch ein Timer 182 in der Kommunikations- und Versorgungseinheit 170 vorgesehen, der als reine Timerschaltung und/oder als Counter ausgelegt ist. Mit diesem Timer 182 wird beispielsweise der gewünschte Messzyklus für die Durchflussmessungen kontrolliert, aber auch eine Übertragung von Durchflussmesswerten, wenn diese nicht direkt nach einer erfolgten Messung, sondern zeitlich versetzt stattfinden soll. Weiterhin kann der Timer 182 für eine Sendung eines generellen Lebenszeichen-Signals des Durchflussmessgerätes 110 (siehe Fig. 2) verwendet werden, wenn vorgesehen wird, daß ein solches Lebenszeichen-Signal zu bestimmten Zeiten oder nach einer bestimmten Anzahl von Messungen ausgesendet werden soll. Eine bei der Kommunikations- und Versorgungseinheit 170 vorgesehene Kommunikations-Elektronik 184 entspricht im Wesentlichen der Kommunikations-Elektronik 140 nach Fig. 2. Sie ist auch bei dem in Fig. 3 dargestellten Beispiel mit einer Sende- und Empfangsantenne verbunden, die aus Gründen der Übersichtlichkeit in Fig. 3 nicht gezeigt ist. Zur Verstärkung geringer Signale kann noch ein Verstärker 186 eingesetzt werden. Eine Energieversorgung 134 (siehe Fig. 2) ist in der in Fig. 3 dargestellten Kommunikations- und Versorgungseinheit 170 ebenfalls vorgesehen. Sie wurde oben zur Fig. 2 bereits beschrieben. Auf ihre Darstellung wurde in Fig. 3 jedoch zur Vereinfachung verzichtet.

Ein in der Kommunikations- und Versorgungseinheit 170 selbst vorgesehener Temperatursensor 188 dient zur Detektion unzulässiger Erwärmung und Temperaturen im Innern des Gehäuses 174 Kommunikations- und Versorgungseinheit 170 und den darin enthaltenen Elektronikschaltungen. Solche unzulässigen Erwärmungen und Temperaturen im Innern des Gehäuses 174 können ein Anzeichen für einen Defekt der Elektronikschaltungen sein als auch für veränderte Umgebungsbedingungen, die sich negativ auf die Lebensdauer der auf die Kommunikations- und Versorgungseinheit 170 und besonders die darin enthaltene Energieversorgung 134, also Batterie 136 auswirken kann. Ist eine unzulässige Erwärmung und Temperatur im Innern des Gehäuses 174 festgestellt, so wird über die Datenverarbeitungs-Einheit 180 ein entsprechendes Alarmsignal generiert und über die Kommunikations-Elektronik 184 drahtlos an ein Master-Durchflussmessgerät oder an eine zuständige andere Messwarte übermittelt. Von dort aus können dann Maßnahmen ergriffen werden, um das betreffende Durchflussmessgerät zu prüfen und gegebenenfalls zu reparieren.

Bisher wurden die in den Fig. 2 und 3 dargestellten Kommunikations- und Versorgungseinheit 128 und 170 für Slave-Durchflussmessgeräte beschrieben. Eine entsprechende Elektronik kann aber auch - und wird vorzugsweise - in einer Kommunikations- und Versorgungseinheit für ein Master-Durchflussmessgerät verwendet werden. In einem solchen Falle übernimmt die Datenverarbeitungseinheit 180 (siehe dazu Fig. 3) die Aufgabe, aus den von Slave-Durchflussmessgeräten für einen Leitungszweig empfangenen einzelnen Durchflussmesswerten - wie oben beschrieben - die Summe zu bilden und mit dem Durchflussmesswert zu vergleichen, den das Slave-Durchflussmessgerät in der Leitung nächsthöherer Ordnung gemessen und an das Master-Durchflussmessgerät gesendet hat. Die Datenverarbeitungseinheit 180 generiert dann auch eventuelle Alarmsignale und übermittelt sie an die zuständige Messwarte und/oder Abrechnungsstelle.

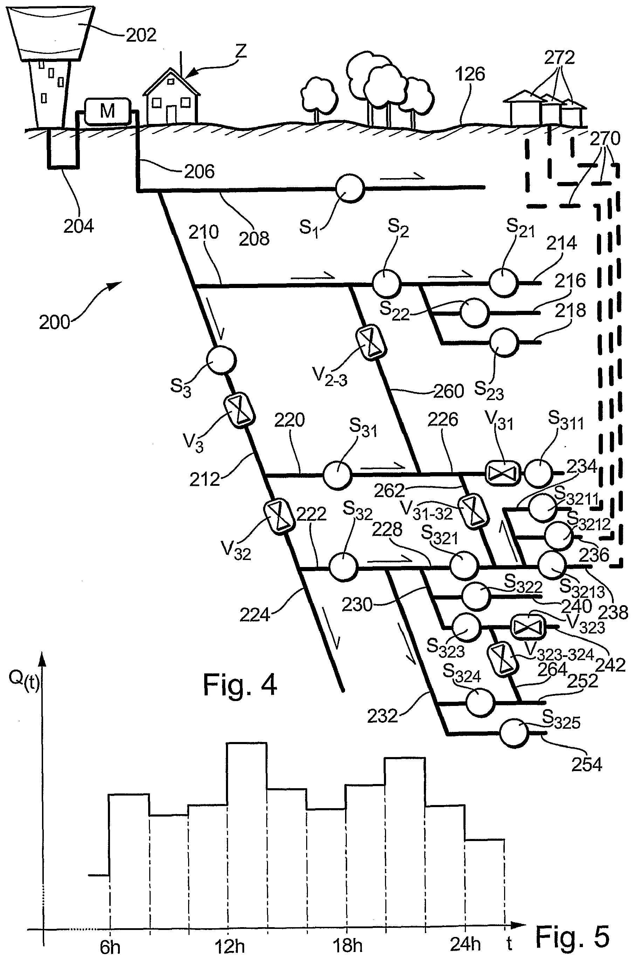

In Fig. 4 ist ein Teil einer weiteren besonderen Ausführung eines Leitungsnetzes aus dem Stand der Technik am Beispiel eines Wasserversorgungsnetzes schematisch dargestellt. Auch dieses Leitungsnetz 200 ist wie das in Fig. 1 veranschaulichte Leitungsnetz hierarchisch strukturiert und aus Leitungszweigen verschiedener Ordnung aufgebaut. Das Leitungsnetz 200 ist nicht vollständig soll nur der Anschauung und Verdeutlichung dienen. Die hier gewählten Proportionen der Leitungen zueinander stimmen daher nicht unbedingt mit einem tatsächlichen Leitungsnetz überein, dessen Leitungen sich in der Praxis über Kilometer erstrecken können.

Von einem hier symbolhaft dargestellten Wasserreservoir 202, beispielsweise ein Wasserturm, führt eine Zuleitung 204 zu einem Master-Durchflussmessgerät M, das an seinem anderen Ende mit einer Hauptleitung 206 im eigentlichen Sinne verbunden ist. Von dieser Hauptleitung 206 zweigen eine erste Leitung 208 erster Subordnung, eine zweite Leitung 210 erster Subordnung und eine dritte Leitung 212 erster Subordnung ab. In diese Leitungen 208, 210 und 212 sind jeweils ein Slave-Durchflussmessgerät S1, ein Slave-Durchflussmessgerät S2 und ein Slave-Durchflussmessgerät S3 integriert.

Die zweite Leitung 210 erster Subordnung verzweigt sich in eine erste Leitung 214 zweiter Subordnung, eine zweite Leitung 216 zweiter Subordnung und eine dritte Leitung 218 zweiter Subordnung, in die auch wieder jeweils ein Slave-Durchflussmessgerät S21, ein Slave-Durchflussmessgerät S22 und ein Slave-Durchflussmessgerät S23 integriert sind. Die dritte Leitung 212 erster Subordnung verzweigt sich in eine vierte Leitung 220 zweiter Subordnung, eine fünfte Leitung 222 zweiter Subordnung und eine sechste Leitung 224 zweiter Subordnung. In der vierten Leitung 220 zweiter Subordnung ist ein Slave-Durchflussmessgerät S31 installiert; und in der fünften Leitung 222 zweiter Subordnung ist ein Slave-Durchflussmessgerät S32 installiert.

Die vierte Leitung 220 zweiter Subordnung verläuft in einer ersten Leitung 226 dritter Subordnung weiter, in der ein Slave-Durchflussmessgerät S311 angeordnet ist. Die fünfte Leitung 222 zweiter Subordnung verzeigt sich in eine zweite Leitung 228 dritter Subordnung, eine dritte Leitung 230 dritter Subordnung und eine vierte Leitung 232 dritter Subordnung. In der zweiten Leitung 228 dritter Subordnung ist ein Slave-Durchflussmessgerät S321 installiert. Die zweite Leitung 228 dritter Subordnung teilt sich in erste Leitung 234 vierter Subordnung, in der ein Slave-Durchflussmessgerät S3211 eingebaut ist, zweite Leitung 236 vierter Subordnung mit einem dort installierten Slave-Durchflussmessgerät S3212 und in eine dritte Leitung 238 vierter Subordnung mit einem Slave-Durchflussmessgerät S3213 auf. Die dritte Leitung 230 dritter Subordnung verzweigt sich in eine vierte Leitung 240 vierter Subordnung, in der ein Slave-Durchflussmessgerät S322 installiert ist, und in eine fünfte Leitung 242 vierter Subordnung mit einem Slave-Durchflussmessgerät S323. Die vierte Leitung 232 dritter Subordnung wiederum teilt sich eine sechste Leitung 252 vierter Subordnung mit einem dort eingebauten Slave-Durchflussmessgerät S324 und in siebte Leitung 254 vierter Subordnung mit einem Slave-Durchflussmessgerät S325.

Um auch bei Leckagen eine Versorgung bzw. Entsorgung von Wasser im betrachteten Leitungsnetz 200 zu gewährleisten, sind Bypass-Leitungen und Ventile vorgesehen, um defekte Leitungszweige verschließen und sie umgehen zu können. So ist bei dem in Fig. 4 schematisch dargestellten Teil eines Beispiels eines Leitungsnetzes 200 zwischen der zweiten Leitung 210 erster Subordnung und der vierten Leitung 220 zweiter Subordnung eine erste Bypass-Leitung 260 vorgesehen, die nach Bedarf durch ein dort eingebautes Absperrventil V2-3 geschlossen oder geöffnet werden kann. Eine zweite Bypass-Leitung 262 ist zwischen der ersten Leitung 226 dritter Subordnung und der zweiten Leitung 228 dritter Subordnung angeordnet. Auch diese zweite Bypass-Leitung 262 kann durch ein dort installiertes Absperrventil V31-32 nach Bedarf verschlossen oder geöffnet werden. Zwischen der fünfte Leitung 242 vierter Subordnung und der sechsten Leitung 252 vierter Subordnung ist eine dritte Bypass-Leitung 264 installiert, die durch ein Absperrventil V323-324 in (264) nach Bedarf verschlossen oder geöffnet werden kann.

In einigen Leitungen unterschiedlicher Subordnung sind auch Absperrventile vorgesehen. So ist in der dritten Leitung 212 erster Subordnung ein Absperrventil V3, in der ersten Leitung 226 dritter Subordnung ein Absperrventil V31 in (226), in der sechsten Leitung 224 zweiter Subordnung ein Absperrventil V32 und in der fünften Leitung 242 vierter Subordnung ein Absperrventil V323 eingebaut.

Zur Vervollständigung des in Fig. 4 beispielhaft dargestellten Leitungsnetzwerkes 200 sind noch Hausleitungen 270 veranschaulicht, über die Häuser 272 versorgt werden. Zur Abrechnung werden die vom Master-Durchflussmessgerät M, das zwischen der Zuleitung 204 und der Hauptleitung 206 installiert ist, ermittelten Durchflussmesswerte an eine zentrale Station Z, die üblicherweise eine Abrechnungsstelle ist, übermittelt. Wie bereits oben zu dem in Fig. 1 dargestellten Leitungsnetz 10 beschrieben, läßt sich auch in dem hierarchisch strukturierten Leitungsnetz 200 nach Fig. 4 eine Leckage durch vergleich der in den einzelnen Leitungen gemessenen Durchflussmesswerte detektieren. Wird beispielsweise zunächst der Leitungszweig aus der Hauptleitung 206, der ersten Leitung 208, der zweiten Leitung 210 und der dritte Leitung 212 erster Subordnung betrachtet, so sollte ohne Leckage in diesen und in den nachfolgenden Leitungen die Summe aus den dort durch die Slave-Durchflussmessgeräte S1, S2 und S3 Durchflussmesswerten zu einen bestimmten Zeitpunkt dem zu eben diesem Zeitpunkt durch das Master-Durchflussmessgerät M ermittelten Durchflussmesswert in geringen vorgebbaren Grenzen entsprechen. Für den Fall einer Durchflussrichtung durch die Leitungen 208, 210 und 212 in Richtung der in Fig. 4 veranschaulichten Pfeile und für den Fall, daß das Master-Durchflussmessgerät M einen Durchflussmesswert ermittelten, der größer als der erwartete Summenwert der Messungen Slave-Durchflussmessgeräte S1, S2 und S3, kann darauf geschlossen werden, daß wenigstens eines der Slave-Durchflussmessgeräte S1, S2 und S3 weniger Durchfluss infolge Verlust in der Leitung messen konnte, weil vor wenigstens einem der Slave-Durchflussmessgeräte S1, S2 und S3 in einer Leitungen eine Leckage ist.

Ein vergleichbarer Fall ließe sich beispielsweise auch für den Leitungszweig aus der zweiten Leitung 228 dritter Subordnung mit dem Slave-Durchflussmessgerät S321, der ersten Leitung 234 vierter Subordnung mit dem Slave-Durchflussmessgerät S3211, der zweiten Leitung 236 vierter Subordnung mit dem Slave-Durchflussmessgerät S3212 und der dritten Leitung 238 vierter Subordnung mit dem Slave-Durchflussmessgerät S3213 betrachten. Für den Fall einer Durchflussrichtung durch die Leitungen 228, 234, 236 und 238 in Richtung der in Fig. 4 veranschaulichten Pfeile und für den Fall, daß das Slave-Durchflussmessgerät S321 einen Durchflussmesswert ermittelt, der größer als der erwartete Summenwert der Messungen der Slave-Durchflussmessgeräte S3211, S3212 und S3213 zum gleichen Zeitpunkt, kann darauf geschlossen werden, daß wenigstens eines der Slave-Durchflussmessgeräte S3211, S3212 und S3213 weniger Durchfluss infolge Verlust durch Leckage in der Leitung messen konnte.

Für alle anderen Leitungszweige eines versorgenden Leitungsnetzes, bei denen in einer übergeordneten Leitung und in den direkt davon abzweigenden Leitungen nächstgeringerer Ordnung jeweils ein Slave-Durchflussmessgeräte installiert ist, gelten bei einer Leckage ähnliche Verhältnisse wie oben beschrieben. Handelt es sich hingegen um ein Leitungsnetz zur Entsorgung, bei dem also das in den Leitungen transportierte Medium von den Leitungen geringster Ordnung zu den Leitungen nächsthöherer Ordnung fließt, führt die gegenläufige Durchflussrichtung zu geänderten Verhältnissen. Im Falle einer Leckage in einer Leitung niederer Ordnung nach dem dort installierten Slave-Durchflussmessgerät - oder in Durchflussrichtung gesehen: vor der Leitung nächsthöherer Ordnung - weist das Slave-Durchflussmessgerät in eben dieser Leitung höherer Ordnung einen Durchflussmesswert aus, der geringer ist als die Summe von den Slave-Durchflussmessgeräten in den Leitungen niedrigerer Ordnung gemessener Durchflussmesswerte.

Die für das in Fig. 4 dargestellte und hier beschriebene Ausführungsbeispiele eines Leitungsnetzes 200 werden die in den Fig. 2 und 3 dargestellten und an entsprechender Stelle beschriebenen Durchflussmessgeräte 110 mit ihren oberirdischen Kommunikations- und Versorgungseinheiten 128 bzw. 170 verwendet. Das Master-Durchflussmessgerät M im Leitungsnetz 200 verfügt gleichfalls über die Einrichtungen zur drahtlosen Kommunikation, um mit den Slave-Durchflussmessgeräten in den nachgeordneten Leitungen zu kommunizieren. Es ist jedoch vorzugsweise an eine kontinuierliche Energieversorgung durch feste installiertes Netz angeschlossen, so daß auf Batterien, die eventuell dort ebenfalls in der dazugehörenden Kommunikations- und Versorgungseinheit eingesetzt sind, nur im Notfall zurückgegriffen werden muß, wenn die Versorgung durch das Festnetz zusammenbrechen sollte.

Wie bereits oben schon beschrieben, ist es sinnvoll, aus Redundanzgründen einige Slave-Durchflussmessgeräte mit gleichen Funktionalitäten auszustatten wie das Master-Durchflussmessgerät. Üblicherweise jedoch bleibt jedes dieser besonderen Slave-Durchflussmessgeräte jedoch solange ein Slave-Durchflussmessgeräte, bis es das Mastergerät ersetzen muß. Unter dieser Prämisse übermitteln alle Slave-Durchflussmessgeräte die von ihnen zu den vorbestimmten Zeitpunkten gemessenen Durchflussmesswerte zum Master-Durchflussmessgerät. Im Master-Durchflussmessgerät, das vorzugsweise mit einer Datenverarbeitungs-Einheit 180 (siehe dazu auch Fig. 3) ausgestattet ist, werden dann die oben beschriebenen Summen der von den Slave-Durchflussmessgeräten in den einzelnen Leitungen gemessenen Durchflussmesswerte gebildet, wobei auch die Summenwerte untergeordneter Leitungen, wie oben beschrieben, mit dem gemessenen Durchflussmesswert in der nächsthöheren Leitung verglichen werden. Im Falle einer Abweichung, die eine Leckage vermuten läßt, wird eine Alarmsignal erzeugt, das an die zuständige Messwarte bzw. Abrechnungsstelle übermittelt wird. Die Abrechnungsstelle wird dann geeignete Maßnahmen ergreifen, um die Leckage im Leitungsnetz 200 zu finden und zu beheben. Um sicherzustellen, daß die Durchflussmessungen der betrachteten Slave-Durchflussmessgeräte, die zur Vermutung der Leckage geführt haben, korrekt waren, löst das Master-Durchflussmessgerät vorzugsweise vor einer Ausgabe eines solchen Alarm-Signals eine aktuelle Überprüfung der Funktionsfähigkeit der Slave-Durchflussmessgeräte in den betroffenen Leitungszweigen aus, indem die Durchflussmessgeräte zu einer Initialisierung von Kontrollmessungen bzw. Prüfabläufen veranlasst werden. erst wenn die Durchflussmesswerte und damit die Leckage bestätigt worden sind, wird ein Alarm-Signal an die Messwarte bzw. Abrechnungsstelle übermittelt.

Um die Genauigkeit zum Auffinden einer Leckage im betrachteten Leitungszweig zu erhöhen, werden die Durchflussmesswerte, die in den Leitungen mit niedrigerer Ordnung gemessen wurden und die bei der Auswertung in die Summenberechnung des Master-Durchflussmessgerät M eingegangen sind, einzeln betrachtet. In einem üblicher Leitungsnetz 200 der vorgestellten Art können typische, durchschnittliche Verbrauchswerte des Mediums, das über das Leitungsnetz Haushalten oder Industriebetrieben zugeführt oder von dort abgeführt wird, ermittelt und aufgezeichnet werden. Bei dem beispielhaft dargestellten Leitungsnetz 200 werden dazu die in den untergeordneten Leitungen von den dort installierten Durchflussmessgeräten gemessenen Durchflussmesswerte für vorgebbare Zeiträume aufzeichnen, woraus dann durchschnittliche und typische Werte entwickelt werden. Ein solches Diagramm ist als Beispiel in Fig. 5 dargestellt. Dieses Diagramm veranschaulicht die von einem Slave-Durchflussmessgerät über den betrachteten Zeitraum t - hier von etwa 6h in Früh bis etwa 2h nachts des folgenden Tages - gemessenen Durchflussmesswerte in einem typischen Wasser- oder Gasversorgungsnetz, wie sie sich aus einem typischen Wasser- bzw. Gasverbrauch Q(t) mehrerer Haushalte, die an das Leitungsnetz angeschlossen sind, ergibt. Um 6h eines beliebigen Werktages steigt der Wasser- bzw. Gasverbrauch nach einem Aufstehen der Bewohner der Haushalte sprunghaft an, bleibt bis zur Mittagszeit auf etwa demselben Niveau um gegen 12h erneut sprunghaft anzusteigen. danach steigt der gemessene Durchfluss bzw. der Verbrauch von Gas bzw. Wasser noch einmal bis gegen 20h an, um danach auf ein nächtliches, geringeres Niveau abzusinken. Für jedes der Slave-Durchflussmessgeräte im betrachteten Leitungsnetz läßt sich ein solches Diagramm auch über einen langen Zeitraum ermitteln und aufzeichnen.

Wird nun eine Leckage in einer der untergeordneten Leitungen vermutet, bei denen die Summe ihrer tatsächlich gemessenen Durchflussmesswerte nicht mit dem tatsächlich gemessenen Durchflussmesswert in der Leitung nächsthöherer Ordnung im Wesentlichen übereinstimmt, werden die gemessenen Durchflussmesswerte jeder untergeordneten Leitung mit den für jede Leitung aufgezeichneten typischen Durchfluss-Diagrammen verglichen. Weicht nun einer der zum betrachteten Zeitpunkt gemessenen Durchflussmesswerte in einer der Leitung stark, das heißt über eine zugestandene maximale Abweichung hinaus, von dem im zugehörigen typischen Durchfluss-Diagramm angegebenen Durchflusswert ab, so handelt mit großer Wahrscheinlichkeit um die Leitung mit der Leckage.

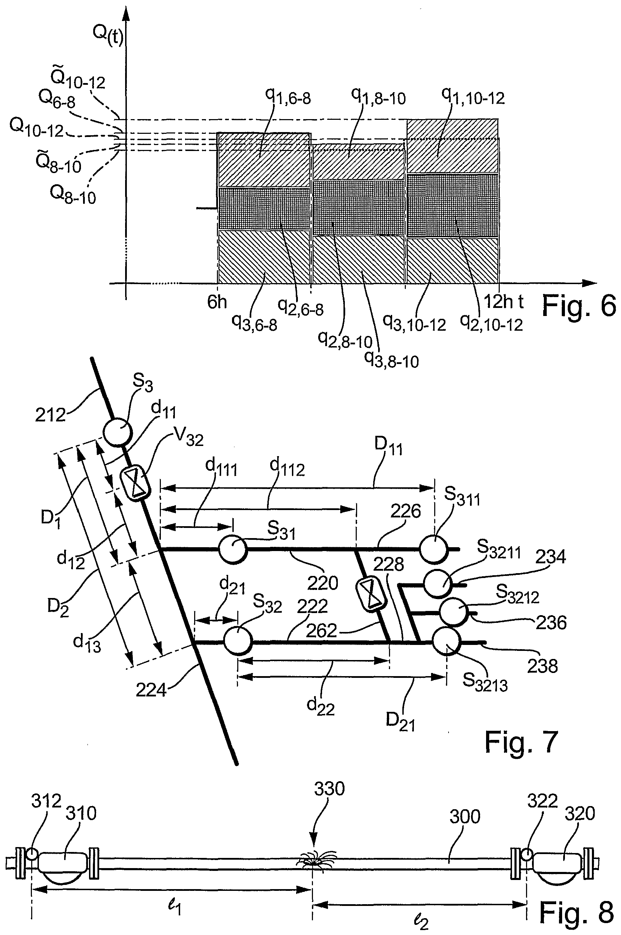

Zur besseren Anschaulichkeit ist in Fig. 6 ein anderes Beispiel eines solchen typischen Durchfluss-Diagrammes für einen Leitungszweig ausschnittweise dargestellt. Hier ist wieder der Durchfluss Q(t) gegenüber der Tageszeit t aufgetragen, wobei die Durchflusswerte für jeweils 2 Stunden gemittelt wurden, ähnlich der Darstellung im Diagramm nach Fig. 5. In Fig. 6 wird ein Leitungszweig betrachtet aus einer Leitung x-ter Subordnung und drei davon abzweigenden Leitungen niederer Ordnung, also (x+1)-ter Subordnung. Fig. 6 verdeutlicht, wie sich der Durchflusswert Q₆₋₈ für die Zeit von 6-8 h morgens in der Leitung x-ter Subordnung zusammensetzt aus den drei Durchflusswerten q**_{1,6-8}** und q**_{2,6-8}** und q**_{3,6-8}** in den drei nachgeschalteten Leitungen der (x+1)-ter Subordnung. Der Durchflusswert Q**₈₋₁₀** für die Zeit von 8-10 h morgens in der Leitung x-ter Subordnung setzt sich aus den drei Durchflusswerten q**_{1,8-10}** und q**_{2,8-10}** und q**_{3,8-10}** in den drei nachgeschalteten Leitungen zusammen und der Durchflusswert Q**₁₀₋₁₂** für die Zeit von 10-12 h in der Leitung x-ter Subordnung aus den drei Durchflusswerten q**_{1,10-12}** und **q_{2,10-12}** und q**_{3,10-12}** in den drei nachgeschalteten Leitungen. Zusätzlich wird aus dem Diagramm in Fig. 6 deutlich, daß die Durchflusswerte in den einzelnen nachgeschalteten Leitungen Tageszeit-abhängig schwanken. Ihr Verhältnis zueinander wechselt entsprechend der jeweils betrachteten Zeit. In Fig. 6 sind außerdem noch Werte Q^{∼}**₆₋₈** und Q^{∼}**₈₋₁₀** und Q^{∼}**₁₀₋₁₂** eingetragen, die zulässige Schwankungen der durchschnittlichen Durchflusswerte zu den betreffenden Tageszeiten veranschaulichen. Dieses sind dann auch die Durchflusswerte die für die oben beschriebene Leckage-Ermittlung dienen. Für jede einzelne Leitung im betrachteten Leitungsnetz, die mit einem Durchflussmessgerät ausgestattet ist, kann ein Durchfluss-Diagramm, wie in den Fig. 5 und 6 dargestellt, erzeugt werden.

Mit dem bisher beschriebenen Verfahren ist es möglich, eine Leckage in einem hierarchisch strukturierten Leitungsnetz zur Versorgung mit Wasser oder Gas zu festzustellen, indem von den Leitungen höchster Ordnung zu den Leitungen niedrigster Ordnung (oder höchster Subordnung) hin jeweils ein zu einem bestimmten Zeitpunkt gemessener Durchflussmesswert in einer Leitung mit der Summe der gemessenen Durchflussmesswerte in den davon abzweigenden Leitungen nächstniederer Ordnung (oder nächsthöherer Subordnung) verglichen wird. Auf diese Weise ist es möglich den Leitungszweig zu identifizieren, in dem eine Leckage in einer der nachgeschalteten Leitungen vorliegt. Mithilfe der Diagramme gemäß Fig. 5 und 6 für die betreffenden nachgeschalteten Leitungen ist es weiterhin möglich, die tatsächliche Leitung herauszufinden, in der sich die Leckage befindet. Wenn es sich bei der beschädigten Leitung um eine relativ kurze Leitung handeln sollte, so kann durch Einsatz von Personal der genaue Ort der Leckage durch Inaugenscheinnahme zügig ermittelt werden. In diesem kann eine Abdichtung recht schnell ausgeführt werden und die Verluste durch austretendes Wasser oder Gas sind gering.

Falls es sich bei der defekten Leitung jedoch um eine längere Leitung handelt, von beispielsweise mehreren Kilometern Länge, so würde ein Inspektion der gesamten Leitung viel Zeit erfordern. Für den Fall, daß wenigstens in kritischen Leitungszweigen, in denen wegen älterer Leitungen oder sonstiger Einflüsse Leckagen mit größerer Wahrscheinlichkeit auftreten können als in anderen Teilen des betrachteten Leitungsnetzes, Durchflussmessgeräte installiert sind, die mit Ultraschallsignalen arbeiten, wird ein weiterer Schritt zur genauen Lokalisierung der Leckage in sehr langen Leitungen durchführbar. Zur Verdeutlichung dient der in Fig. 7 schematisch dargestellte Ausschnitt des Leitungsnetzes 200 nach der Fig. 4 in Verbindung mit der in Fig. 8 schematisch dargestellten Leckage.

Zur Durchflussmessung verwendete Ultraschall-Durchflussmessgeräte für Rohrleitungen arbeiten üblicherweise mit zwei Transducern, Ultraschallwandlern, deren Abstand eine Messstrecke definiert. Jeder Transducer arbeit als Sender und als Empfänger, so daß Ultraschallsignale, die von einem Transducer in ein in der Leitung transportiertes Medium gesendet werden, vom anderen Transducer empfangen werden. Die Signale werden alternierend in beide Richtungen gesendet, wobei jeweils die Laufzeit der Signale ermittelt wird. Werden Signale in Durchflussrichtung des Mediums in der Leitung gesendet, ergeben sich andere Laufzeiten als bei Signalen gegen die Durchflussrichtung des Mediums. Bei genauer Kenntnis des Mediums ist die Differenz der Laufzeiten ein Maß für den Durchfluss. Für die Durchflussmessung ist die Messstrecke entlang des Weges des Mediums ungestört, da sie sich im Durchflussmessgerät befindet.

Üblicherweise werden für die Durchflussmessung nur die Signale über die Messstrecke, also zwischen den beiden Transducern herangezogen. Es ist jedoch möglich, mit einem Transducer in einem Durchflussmessgerät in einer Leitung auch Messsignale von einem Transducer eines Ultraschall-Durchflussmessgeräts in einer mit der ersteren Leitung verbundenen Leitung höherer oder niederer Ordnung zu empfangen. Dabei wird jedoch der tatsächliche und nicht immer ungestörte Weg des Mediums in diesen (Rohr-)Leitungen eine Rolle, was für eine genaue Lokalisierung einer Leckage in einer sehr langen Leitung herangezogen werden kann.

In dem in Fig. 7 schematisch dargestellten Ausschnitt des Leitungsnetzes 200 nach der Fig. 4 wurde nach dem oben bereits beschriebenen Verfahren beispielsweise eine Leckage in der vierten Leitung 220 zweiter Subordnung vor dem Slave-Durchflussmessgerät S31 gefunden. Vorausgesetzt wird, daß es sich beim Slave-Durchflussmessgerät S31 wie auch bei dem Slave-Durchflussmessgerät S32 in der fünften Leitung 222 zweiter Subordnung und bei dem Slave-Durchflussmessgerät S3 in dritten Leitung 212 erster Subordnung vorteilhafterweise um Ultraschall-Durchflussmessgeräte handelt und diese so ausgestattet sind, daß sie nicht nur Signale der eigenen Transducer empfangen können sondern auch Signale benachbarter Slave-Durchflussmessgeräte.

Wird nun ein Ultraschallsignal vom Slave-Durchflussmessgerät S31 in Richtung auf das Slave-Durchflussmessgerät S3 ausgesendet, so wird dieses Signal nach einer bestimmten Laufzeit beim Slave-Durchflussmessgerät S3 und nach einer anderen Laufzeit beim Slave-Durchflussmessgerät S32 eintreffen. Ein Weg, den das Ultraschallsignal vom Slave-Durchflussmessgerät S31 zum Slave-Durchflussmessgerät S3 zurücklegt, setzt sich aus den in Fig. 7 bezeichneten Strecken d111 und D1 zusammen. Bei Kenntnis der Ausbreitungsgeschwindigkeit der Ultraschallsignale im Medium in den Leitungen läßt sich die tatsächlich von den Slave-Durchflussmessgeräten S3 und S31 ermittelte Laufzeit eines Signals mit der theoretisch berechenbaren Laufzeit vergleichen, wobei die Durchflussrichtung des Mediums zu berücksichtigen ist. Liegt eine Leckage in der betrachteten Leitung vor, so ist breiten sich die Ultraschallsignale mit einer anderen Geschwindigkeit aus, als in einer ungestörten Leitung.

Im Slave-Durchflussmessgerät S3 sind außerdem ein Reflektionssignal von einer Verbindungsstelle der vierten Leitung 220 zweiter Subordnung mit der dritten Leitung 212 erster Subordnung messbar. Das ursprünglich vom Slave-Durchflussmessgerät S31 ausgesandte Signal durchläuft die in Fig. 7 mit "d111" bezeichnete bekannte Strecke, wird an der Leitungsverzweigung reflektiert, durchläuft erneut die Strecke d111 in umgekehrter Richtung und kann am Slave-Durchflussmessgerät S31 empfangen werden. Die dort gemessene Laufzeit für dieses Reflektionssignal kann wieder mit der theoretisch unter Berücksichtigung der Durchflussrichtung des Mediums verglichen werden. Eine Leckage in der vierten Leitung 220 zweiter Subordnung führt zu einer Störung des Durchflusses des Mediums, die entweder zu einer Verringerung der Ausbreitungsgeschwindigkeit der Signale führt oder zu einer Reflektion des Ultraschallsignals. Eine Leckage zwischen der Slave-Durchflussmessgerät S31 und der Leitungsverzweigung läßt sich durch ein im Slave-Durchflussmessgerät S31 erfaßtes Reflektionssignal erkennen, das vor dem Reflektionssignal der Leitungsverzweigung am Slave-Durchflussmessgerät S31 ankommt. Aus einem Vergleich der Laufzeit eines vermuteten Reflektionssignal an der Leckage mit der Laufzeit des Reflektionssignal von der Leitungsverzweigung läßt sich eine genaue Position der Leckage ermitteln.

Zur Sicherheit kann die genaue Position der Leckage in der vierten Leitung 220 zweiter Subordnung vor dem Slave-Durchflussmessgerät S31 auch noch mittels Ultraschallsignalen vom Slave-Durchflussmessgerät S3 ermittelt und damit überprüft werden. Ein vom Slave-Durchflussmessgerät S3 in Richtung auf die vierte Leitung 220 zweiter Subordnung ausgesandtes Signal ruft eine erste Reflektion am Absperrventil V32 hervor, das eine bekannte Strecke d11 vom Slave-Durchflussmessgerät S3 entfernt in der dritten Leitung 212 erster Subordnung installiert ist. Eine weiteres, später beim Slave-Durchflussmessgerät S3 eintreffendes Reflektionssignal stammt von der Leitungsverzweigung in die vierte Leitung 220 zweiter Subordnung. Noch etwas später kann ein weiteres Reflektionssignal vom Slave-Durchflussmessgerät S3 erfaßt werden, das vom Slave-Durchflussmessgerät S31 stammt. Dieses letztere Reflektionssignal durchläuft die in Fig. 7 dargestellten bekannten Strecken d11, d12 und d111 sowohl hin als auch zurück. In der Hälfte der Zeit müßte das vom Slave-Durchflussmessgerät S3 ausgesandte Signal vom Slave-Durchflussmessgerät S31 selbst erfaßbar sein. Sollte jedoch ein Signal vom Slave-Durchflussmessgerät S3 erfaßt werden, das nach dem Reflektionssignal der Leitungsverzweigung aber vor dem theoretisch errechenbaren Reflektionssignal am Slave-Durchflussmessgerät S31 eintrifft, so ist dies mit großer Wahrscheinlichkeit ein Reflektionssignal an einer Leckage in der vierten Leitung 220 zweiter Subordnung vor dem Slave-Durchflussmessgerät S31. Durch Vergleich der Laufzeit dieses Leckage-Reflektionssignal mit der Laufzeit des Reflektionssignals für die Leitungsverzweigung, läßt sich wiederum bei bekannter Strecke D1 vom Slave-Durchflussmessgerät S3 zur Leitungsverzweigung, die genaue Entfernung der Leckage von der Leitungsverzweigung bestimmen. Sollte aufgrund der Leckage gar kein Medium mehr das Slave-Durchflussmessgerät S31 erreichen, was sich bereits vorher schon durch einen hier nicht feststellbaren Durchfluss gezeigt hätte, würde natürlich das Slave-Durchflussmessgerät 3 gar kein Reflektionssignal vom Slave-Durchflussmessgerät 31 mehr erfassen können. Die durch die Leckage veränderte Ausbreitungsgeschwindigkeit der Signale ist auch hier ein Indiz für das Vorliegen einer Leckage.

Auf ähnliche Weise können auch andere in Fig. 7 dargestellte Slave-Durchflussmessgeräte wie zum Beispiel das Slave-Durchflussmessgerät S32 verwendet werden, um eine Leckage in der vierten Leitung 220 zweiter Subordnung vordem Slave-Durchflussmessgerät S31 genau zu lokalisieren. Ebenso lassen sich Leckagen in der ersten Leitung 234, der zweiten Leitung 236 oder der dritten Leitung 238 vierter Subordnung vor dem dort jeweils installierten Slave-Durchflussmessgerät S3211, S3212 oder S3213 mithilfe von Signalen genau lokalisieren, die vom der Slave-Durchflussmessgeräte S32 zu diesen Leitungen 234, 236, 238 ausgesendet werden. Genauso ist es möglich, daß hier am Beispiel der in Fig. 7 dargestellten Leitungen in anderen Leitungen des Leitungsnetzes zur genauen Lokalisierung einer Leckage durchzuführen.

Die anhand der Fig. 7 beispielhaft vorgestellten Verfahren zur genaueren Lokalisierung einer Leckage in einer Leitung des Leitungsnetzes verwenden Ultraschall- Durchflussmessgeräte und nutzen die durch das Medium übertragenen Signale. Für den Fall, wo Durchflussmessgeräte anderer Art im Leitungsnetz bereits installiert sind, läßt sich durch zusätzlich in kritischen Leitungszweigen angebrachte Ultraschallmessgeräte eine genaue Lokalisierung von Leckagen durchführen. Wie durch Fig. 8 an einem Beispiel einer beliebigen Leitung 300 veranschaulicht, kann zusätzlich zu einem ersten Durchflussmessgerät 310, das nicht mit Ultraschall-Messsignalen arbeitet, ein erstes Ultraschallmessgerät 312 auf der Leitung 300 in der Nähe oder direkt am ersten Durchflussmessgerät 310 montiert werden. Das Ultraschallmessgerät 312 muß kein Ultraschall-Durchflussmessgerät sein, sondern muß nur einen Transducer aufweisen, der Ultraschallsignale aussenden und empfangen kann. Die Signale müssen auch nicht unbedingt in die Leitung, das heißt in das dort transportierte Medium gesendet werden, sondern es können auch Signale in eine Wandung der die Leitung 300 eingeleitet werden, im Sinne von Körperschallsignale oder Oberflächensignalen. Sofern das Ultraschallmessgerät 312 über keine eigene Energieversorgung verfügt, erlaubt eine Montage nahe bei einem Durchflussmessgerät 310 dem Ultraschallmessgerät 312 von der Energiequelle, die das Durchflussmessgerät 310 speist, zu partizipieren.

Bei einem nächsten oder übernächsten zweiten Durchflussmessgerät 320, das nicht mit Ultraschall-Messsignalen arbeitet, kann ein weiteres, zweites Ultraschallmessgerät 322 auf der Leitung 300 in der Nähe oder direkt am zweiten Durchflussmessgerät 320 montiert werden. Auch hier gilt das für das erste Ultraschallmessgerät 312 im vorigen Absatz Gesagte. Eine Leckage 330 der Leitung 300, die vom ersten Ultraschallmessgerät 312 eine Strecke I₁ entfernt ist und vom zweiten Ultraschallmessgerät 322 eine Strecke I₂, stellt eine Störstelle für die Ausbreitung von Signalen in der Leitung 300 dar, die von einem der Ultraschallmessgerät 312, 322 zum jeweils anderen gesendet werden. Falls das erste Ultraschallmessgerät 312 ein Signal auf bzw. in die Leitung 300 gibt, so wird an der Leckage 330 ein Reflektionssignal entstehen, das die Strecke I₁ zum ersten Ultraschallmessgerät 312 zurückläuft. Dieses Reflektionssignal wird am ersten Ultraschallmessgerät 312 vor demjenigen Reflektionssignal eintreffen, das am zweiten Ultraschallmessgerät 322 selbst entsteht. Mit Kenntnis der Ausbreitungsgeschwindigkeit des Signals in bzw. auf Wandung der Leitung 300 kann die Strecke **I₁** als Entfernung der Leckage vom ersten Ultraschallmessgerät 312 relativ genau ermittelt werden. Entsprechend kann mit Signalen des zweiten Ultraschallmessgerät 322 die Strecke I₂ als Entfernung der Leckage 330 vom zweiten Ultraschallmessgerät 322 bestimmt werden. Zu beachten ist auch, daß sich Ausbreitungsgeschwindigkeit der Signale im Medium über die betrachtete Leitung aufgrund der Leckage ändert.

Neben der oben beschriebenen Möglichkeit Ultraschallmessgerät 312 und 322 an bzw. auf der Leitung 300 und neben den Durchflussmessgeräten 310 bzw. 320 zu installieren, ist es auch möglich, das Durchflussmessgerät 310 und das Ultraschallmessgerät 312 in einem gemeinsamen Gehäuse unterzubringen. Entsprechend können auch Durchflussmessgerät 320 und das Ultraschallmessgerät 322 in einem gemeinsamen Gehäuse zu vereinen.

Bei den beschriebenen Ausführungsformen von Leitungsnetzen 10, 200 wurde davon ausgegangen, daß, wie in Fig. 2 und dem dazugehörenden Beschreibungstext erläutert, jedem Slave-Durchflussmessgerät nach der Erfindung eine eigene Energieversorgung 134 in Form einer unabhängigen und austauscharen Batterie zugeordnet ist. Wie oben erwähnt, ist die Energieversorgung 134 vorzugsweise in der zu jedem Slave-Durchflussmessgerät gehörenden Kommunikations- und Versorgungseinheit untergebracht, die - im Gegensatz zu den meisten Slave-Durchflussmessgeräten - überirdisch installiert ist. Die Installation auf der Erdoberfläche erleichtert das Austauschen der Batterie .

Andererseits wurde oben auch darauf hingewiesen, daß die betrachteten Leitungsnetze zur Versorgung mit Wasser oder Gas oder zur Entsorgung von gebrauchtem Wasser eine große Ausdehnung haben können. Um sicher zu stellen, daß die Slave-Durchflussmessgerät jederzeit funktionieren ist die Energieversorgung zu sichern bzw. sind geeignete Maßnahmen zu treffen, die einen zügigen Austausch nahezu erschöpfter Batterien erlauben. Nach der Erfindung wird dies dadurch erreicht, daß jedes Slave-Durchflussmessgerät zu vorgebbaren Zeiten die verbleibende Lebensdauer der ihr beigeordneten Batterien bestimmt. Bei Unterschreiten einer vordefinierten Restenergie meldet das betreffende Slave-Durchflussmessgerät über seine Kommunikations- und Versorgungseinheit ein entsprechendes Signal an das Master-Durchflussmessgerät, das dieses Signal an eine Messwarte bzw. zentrale Station weitergibt, von der aus Maßnahmen zum Austausch der Batterie eingeleitet werden können.

Da der Sicherstellung einer kontinuierlichen Energieversorgung der Slave-Durchflussmessgeräte eine große Rolle zukommt, ist sinnvoll, die Slave-Durchflussmessgeräte so einzurichten, daß sie aufgrund von periodischen Anfragen durch das Master-Durchflussmessgerät selbst eine verbleibende Lebensdauer der Batterie bestimmen und diese an das Master-Durchflussmessgerät übermitteln. Wenn das Master-Durchflussmessgerät wiederum die verbleibenden Lebensdauern der Batterien an die zentrale Station bzw. Messwarte schickt, kann die kontinuierliche Funktionsbereitschaft der Slave-Durchflussmessgeräte zentral von dort aus überwacht werden.

Eine theoretisch verbleibende Lebensdauer der betrachteten austauscharen Batterie wird von einem Slave-Durchflussmessgerät rechnergestützt wie folgt bestimmt. In einem im Slave-Durchflussmessgerät, vorzugsweise in der Kommunikations- und Versorgungseinheit 170 (siehe dazu Fig. 3) wird eine Matrix von Einflussfaktoren, die eine theoretische Lebensdauer der Batterie 136 beeinflussen, abgespeichert zusammen mit verschiedenen theoretischen Lebensdauern für verschiedene Variation bzw. Muster von verschiedenen Einflussfaktoren oder Kombinationen davon. Von der Installation der Batterie 136 an am Ort des zugehörenden Slave-Durchflussmessgerätes werden die Einflussfaktoren überwacht, bis zu ihrem Versagen oder Ende. Vorzugsweise werden die Einflussfaktoren zu vorgegebenen Zeitpunkten ermittelt bzw. festgehalten, so daß ihre Entwicklung und/oder Änderung in Abhängigkeit einer bis dahin vergangenen Betriebszeit des betreffenden Slave-Durchflussmessgerätes aufgezeichnet wird. Die zu berücksichtigen Einflussfaktoren sind beispielsweise die Einschalthäufigkeit des betreffenden Slave-Durchflussmessgerätes, sein Messzyklus, seine Betriebszeit, Druck und Temperatur der Umgebung, der die Kommunikations- und Versorgungseinheit 128, 170 und ein in der Energiequelle gemessener Spannungsabfall pro Zeit bzw. die Änderung des Spannungsabfalls. Der aktuelle gemessene Spannungsabfall pro Zeit wird dazu sinnvollerweise mit einem theoretisch berechnetem Wert für die betreffende Konfiguration des oder der Durchflussmessgeräte verglichen. Bei Überschreiten einer vorgegebenen Abweichung wird ein Alarmsignal generiert. Möglich ist es auch aus mehreren aktuell gemessenen Spannungsabfällen pro Zeit ein Trend zu ermitteln, der mit einem theoretisch berechnetem Wert für die betreffende Konfiguration des oder der Durchflussmessgeräte verglichen wird. Auch hier wird bei Überschreiten einer vorgegebenen Abweichung ein Alarmsignal generiert, das auf einen erforderlichen Austausch der Batterie Energiequelle hinweist.

Sinnvollerweise werden die Erfassung der Einflußfaktoren und die Bestimmung der verbleibenden theoretischen Lebensdauer der Batterie von einem in der Kommunikations- und Versorgungseinheit 170 (siehe dazu Fig. 3) integrierten Rechner, beispielsweise der Datenverarbeitungs-Einheit 180 im Zusammenwirken mit der Energiemanager-Elektronik 178 gesteuert bzw. ausgeführt.

Praktischerweise wird die theoretisch verbleibende Lebensdauer der Batterie bei jeder Änderung von Messzyklen des Slave-Durchflussmessgerätes oder periodisch bestimmt, sofern zwischenzeitlich keine Bestimmung aufgrund geänderter Messzyklen des Slave-Durchflussmessgerätes stattgefunden hat. Dabei werden verschiedene theoretisch verbleibenden Lebensdauern für verschiedene Wertepaarungen von Einflussfaktoren ermittelt, die vorzugsweise zusammen mit den verschiedenen Wertepaarungen von Einflussfaktoren einem Benutzer auf einer Anzeigevorrichtung, der einen der Einflußfaktoren, wie beispielsweise den Messzyklus des Slave-Durchflussmessgerätes ändern möchte. Eine Anzeige auf einer Anzeigevorrichtung geschieht vorzugsweise in der Messwarte, indem die verschiedenen theoretisch verbleibenden Lebensdauern der Batterien der betreffenden Slave-Durchflussmessgeräte über das Master-Durchflussmessgerät der Messwarte oder zentralen Station übermittelt werden. Das ganze läßt sich natürlich auch auf ein mobilen oder fest installierten Computer leiten, der die Daten vom Master-Durchflussmessgerät oder den Slave-Durchflussmessgeräten direkt empfängt. Dem Benutzer sollte die Möglichkeit gegeben werden, eine Änderung von Werten der Wertepaarungen bzw. der Einflussfaktoren auf einer Eingabevorrichtung des Computers vornehmen zu können, wobei nach jeder Eingabe bzw. Änderung der Wertepaarungen von Einflussfaktoren durch den Benutzer eine neue den geänderten Werten entsprechende theoretisch verbleibende Lebensdauer der betrachteten Batterieermittelt und auf der Anzeigevorrichtung dargestellt wird.

Die von einem Benutzer für die gewünschte theoretisch verbleibende Lebensdauer der betrachteten Batterieausgewählten Einflussfaktoren, wie zum Beispiel der Messzyklus des betrachteten Slave-Durchflussmessgerätes, sollten sinnvollerweise direkt bei einer Konfiguration bzw. Parametrisierung des betrachteten Slave-Durchflussmessgerätes verwendet werden. Dieses Verfahren macht dann besonders Sinn, wenn bei einem betrachteten Slave-Durchflussmessgerät die Lebensdauer der dazugehörenden Batterie mehrfach von den Lebensdauern der Batterie anderer Slave-Durchflussmessgeräte stark abweicht. In diesem Fall wird eine Festlegung und Gestaltung einer theoretisch verbleibenden Lebensdauer einer austauschbaren Batterie eines betreffenden Durchflussmessgerätes oder mehrerer Durchflussmessgeräte periodisch durchgeführt, wobei dem Benutzer jeweils die zur bestehenden Konfiguration bzw. Parametrisierung des betreffenden Slave-Durchflussmessgerätes ermittelte theoretisch verbleibenden Lebensdauer angezeigt wird. Er bekommt dann die Möglichkeit zur Änderung der Konfiguration bzw. Parametrisierung, insbesondere zur Änderung des Messzyklus eingeräumt, wobei die jeweils aus einer Änderung der Konfiguration bzw. Parametrisierung resultierende geänderte theoretisch verbleibenden Lebensdauer der Batterie verdeutlicht wird. So kann der Benutzer entscheiden, auf welche Weise er die Lebensdauer der Batterie des betreffenden Slave-Durchflussmessgerätes verbessern kann.

Oben wurde bereits beschrieben, daß die Slave-Durchflussmessgeräte Messgeräte verschiedener Messprinzipien sein können. Für Durchflussmessungen von Wasser beispielsweise können dies Ultraschall-Durchflussmessgeräte, magnetisch-induktive Durchflussmessgeräte, Corriolis- Durchflussmessgeräte oder Vortex-Durchflussmessgeräte sein. Gerade bei der Ermittlung und genauen Lokalisierung von Leckagen sind in Wasser-Leitungsnetzen Slave-Durchflussmessgeräte magnetisch-induktiven Messanordnung und einer Ultraschall-Messanordnung in einem gemeinsamen Gehäuse sehr sinnvoll.

Leitungsnetze zur Versorgung mit Wasser oder Gas transportieren ein verkaufsfähiges Medium zu den dort angeschlossenen Verbrauchern. Für eine diesbezügliche Abrechnung ist, wie bereits beschrieben, häufig eine zentrale Abrechnungsstelle eingerichtet, die vom Master-Durchflussmessgerät mit abzurechnenden Durchflusswerten versorgt wird. Insofern ist es sinnvoll, daß wenigstens eines der Durchflussmessgeräte im betrachteten Leitungsnetz ein eichfähiges Durchflussmessgerät ist, das vorzugsweise am Ort seiner Installation kalibrierbar ist. Für ein Leitungsnetz zur Versorgung mit Gas ist es darüber hinaus wichtig die Temperatur und den Druck des transportierten Gases zu kennen. Vorzugsweise sind daher mehrere Slave-Durchflussmessgeräte an vorbestimmten Stellen mit einem Temperatursensor und einem Drucksensor ausgestattet, wie in der Fig. 2 dargestellt und in der dazu gehörenden Beschreibung erklärt ist.

## Patentansprüche

1. Verfahren zur rechnergestützten Bestimmung einer theoretisch verbleibenden Lebensdauer einer austauschbaren Batterie,
wobei in einem Leitungsnetz (10, 200) zur Versorgung mit Wasser oder Gas und/oder zum Abtransport von Brauchwasser, welches eine hierarchische Struktur aus Leitungszweigen aus Leitungen (12-82; 206-254, 270) aufweist, mehrere Leitungszweige mit jeweils wenigstens einem als Stand-Alone-Gerät ausgestalten Durchflussmessgerät ausgestattet sind, die zu einem Master-Slave-Netz verbunden sind und drahtlos miteinander kommunizieren,
wobei in dem Leitungsnetz wenigstens ein Durchflussmessgerät in einem hierarchisch übergeordneten Leitungszweig (12) als Master-Durchflussmessgerät (52; M) sowie mehrere andere Durchflussmessgeräte in einem hierarchisch nachgeordneten Leitungszweig als Slave-Durchflussmessgeräte ausgestaltet sind, die von ihnen ermittelte Messwerte an das Master-Durchflussmessgerät (52; M) melden,
wobei wenigstens die Slave-Durchflussmessgeräte von jeweils einer eigenen, dem Salve-Durchflussmessgerät zugeordneten und damit verbundenen Batterie mit Energie versorgt werden,
und wobei das Verfahren für wenigstens eines der Slave-Durchflussmessgeräte in dem Leitungsnetz durchgeführt wird und folgende Verfahrensschritte umfasst, die von einem in einer Kommunikations- und Versorgungseinheit des betreffenden Slaves-Durchflussmessgeräts integrierten und damit verbundenen Rechner durchgeführt werden:
• Definieren einer Matrix von Einflussfaktoren, die eine theoretische Lebensdauer der Batterie beeinflussen, wobei als ein Einflussfaktor ein in der Batterie gemessener Spannungsabfall pro Zeit berücksichtigt wird und wobei es sich bei den Einflussfaktoren insbesondere um die Einschalthäufigkeit des betreffenden Slave-Durchflussmessgerätes, seinen Messzyklus, seine Betriebszeit, Druck und Temperatur der Umgebung handelt;
• vom Rechner gesteuerte Erfassung der Einflussfaktoren von der Installation der Batterie an bis zu ihrem Versagen oder Ende zu vorgegebenen Zeitpunkten in Abhängigkeit einer bis dahin vergangenen Betriebszeit des betreffenden Slave-Durchflussmessgerätes;
• vom Rechner durchgeführte Bestimmung der theoretischen Lebensdauer bei Variation von verschiedenen Einflussfaktoren mithilfe der Matrix, unter Berücksichtigung aller bisher erfassten Einflussfaktoren und der abgelaufenen Betriebszeit;
• wobei der aktuelle gemessene Spannungsabfall pro Zeit mit einem theoretisch berechneten Wert für die betreffende Konfiguration des Slave-Durchflussmessgeräts verglichen und bei Überschreiten einer vorgegebenen Abweichung ein Alarmsignal generiert wird; und
• wobei bei Unterschreiten einer vorbestimmten verbleibenden theoretischen Lebensdauer ein Signal generiert wird, das auf einen erforderlichen Austausch der Batterie hinweist.

2. Verfahren nach Anspruch 1, **dadurch gekennzeichnet, daß** die theoretisch verbleibende Lebensdauer der Batterie bei jeder Änderung von Messzyklen des Slave-Durchflussmessgerätes durch den Rechner bestimmt wird.

3. Verfahren nach einem Ansprüche 1 oder 2, **dadurch gekennzeichnet, daß** die theoretisch verbleibende Lebensdauer der Batterie durch den Rechner periodisch bestimmt wird, sofern zwischenzeitlich keine Bestimmung aufgrund geänderter Messzyklen des Slave-Durchflussmessgerätes stattgefunden hat.

4. Verfahren nach Anspruch 1 das zur Festlegung und Gestaltung einer theoretisch verbleibenden Lebensdauer angewendet wird, **gekennzeichnet durch** folgende Verfahrensschritte,
• vom Rechner werden verschiedenene theoretisch verbleibendene Lebensdauern für verschiedene Wertepaarungen von Einflussfaktoren ermittelt;
• wobei die verschiedenen theoretisch verbleibenden Lebensdauern zusammen mit den verschiedenen Wertepaarungen von Einflussfaktoren einem Benutzer auf einer Anzeigevorrichtung des Rechners angezeigt werden
• wobei eine Änderung der Werte der Wertepaarungen bzw. der Einflussfaktoren auf einer Eingabevorrichtung des Rechners durch den Benutzer ermöglicht wird; und
• wobei der Rechner nach jeder Eingabe bzw. Änderung der Wertepaarungen von Einflussfaktoren durch den Benutzer eine neue den geänderten Werten entsprechende theoretisch verbleibende Lebensdauer ermittelt und sie auf der Anzeigevorrichtung des Rechners darstellt.

5. Verfahren nach Anspruch 1, **dadurch gekennzeichnet, daß** der Rechner für eine Wertepaarung von Einflussfaktoren, die der Benutzer letztlich auswählt, jene Einflussfaktoren, die einen gewünschten Messzyklus des Slave-Durchflussmessgerätes oder der Slave-Durchflussmessgeräte betreffen, zur Konfiguration bzw. Parametrisierung des oder der Slave-Durchflussmessgeräte verwendet.

6. Verfahren nach Anspruch 1,
**dadurch gekennzeichnet, daß** aus mehreren aktuell gemessenen Spannungsabfällen pro Zeit ein Trend ermittelt wird, der mit einem theoretisch berechnetem Wert für die betreffende Konfiguration des oder der Slave-Durchflussmessgeräte verglichen und bei Überschreiten einer vorgegebenen Abweichung ein Alarmsignal generiert wird.

## Claims

1. Procedure for the computer-aided determination of the theoretically remaining service life of an exchangeable battery,
wherein in a pipe distribution network (10, 200) for the supply of water or gas, and/or for the removal of process water, which has a hierarchical structure of branches of pipes (12-82 ; 206-254, 270), several branches of pipes are each fitted with at least one flowmeter designed as a stand-alone device, wherein said branches are connected in a master/slave network and communicate wirelessly with one another,
wherein, in the pipe network, at least one flowmeter is designed as the master flowmeter (52; M) in a hierarchically higher-level pipe branch (12), and wherein several other flowmeters in a hierarchically lower-level pipe branch are designed as slave flowmeters that report the measured values they measure to the master flowmeter (52 ; M),
wherein at least the slave flowmeters are supplied with energy in each case by an individual battery that is assigned to the slave flowmeter and connected to said flowmeter,
and wherein the procedure is carried out for at least one of the slave flowmeters in the pipe network and comprises the following steps which are carried out by a computer that is integrated in a communication and supply unit of the affected slave flowmeter and that is connected to said flowmeter:
• Definition of a matrix of influencing factors that affect a theoretical service life of a battery, wherein a voltage drop per time that is measured in the battery is considered as an influencing factor and wherein the influencing factors constitute, in particular, the switch-on frequency of the slave flowmeter concerned, its measuring cycle, its operating time, and the pressure and temperature of the environment;
• Computer-controlled recording of the influencing factors - starting from the installation of the battery through to the battery's failure or end of life - at defined times depending on an operating time of the slave flowmeter in question that had elapsed by this point in time;
• Determination by the computer of the theoretical service life with the variation of various influencing factors with the help of the matrix taking into account all influencing factors recorded up until now and the operating time that has elapsed;
• Wherein the voltage drop per time that is currently measured is compared against a theoretically calculated value for the relevant configuration of the slave flowmeter and wherein an alarm signal is generated if a predefined deviation is exceeded; and
• wherein - if the value drops below a predefined remaining theoretical service life - a signal is generated that indicates that the battery needs to be replaced.

2. Procedure as claimed in Claim 1, **characterized in that** the theoretically remaining service life of the battery is determined by the computer with each change of the measuring cycles of the slave flowmeter.

3. Procedure as claimed in Claim 1 or 2, **characterized in that** the theoretically remaining service life of the battery is determined periodically by the computer provided that the service life has not been determined in the interim due to altered measuring cycles of the slave flowmeter.

4. Procedure as claimed in Claim 1 that is used to determine and configure a theoretically remaining service lives, **characterized by** the following steps:
• Various theoretically remaining service lives are determined by the computer for various value pairs of influencing factors;
• Wherein the various theoretically remaining service lives are shown to a user on a display unit of the computer together with the various value pairs of influencing factors
• Wherein it is possible for the user to modify the values of the value pairs or the influencing factors on an input unit of the computer;
• Wherein, following each entry or change of value pairs of influencing factors by the user, the computer determines a new theoretically remaining service life that corresponds to the modified values and displays this on the display unit of the computer.

5. Procedure as claimed in Claim 1, **characterized in that** - for a value pair of influencing factors that the user ultimately selects - the computer uses the influencing factors that concern a desired measuring cycle of the slave flowmeter or the slave flowmeters for the configuration or parameterization of the slave flowmeter or flowmeters.

6. Procedure as claimed in Claim 1,
**characterized in that** a trend is determined from several voltage drops per time that are currently measured, wherein said trend is compared with a theoretically calculated value for the relevant configuration of the slave flowmeter(s) and **in that** an alarm is generated if a predefined deviation is exceeded.

## Revendications

1. Procédé destiné à la détermination assistée par ordinateur d'une durée de vie théorique restante d'une batterie interchangeable,
pour lequel, dans un réseau de distribution (10, 200) destiné à l'alimentation en eau ou en gaz et/ou à l'évacuation des eaux usées, qui présente une structure constitués de branches de conduites (12-82 ; 206-254, 270), plusieurs branches de conduites sont équipées respectivement avec au moins un débitmètre conçu en tant qu'appareil autonome, lesquelles branches sont reliées en un réseau maître-esclave et communiquent entre elles en mode sans fil,
pour lequel, dans le réseau de distribution, au moins un débitmètre est conçu, dans une branche de conduite (12) hiérarchiquement supérieure, en tant que débitmètre maître (52 ; M), ainsi que plusieurs autres débitmètres dans une branche de conduite hiérarchiquement subordonnée, en tant que débitmètre esclave, qui transmettent au débitmètre maître (52 ; M) les valeurs mesurées qu'ils ont déterminées,
pour lequel au moins les débitmètres esclaves sont chacun alimentés en énergie par une batterie propre, laquelle est affectée au débitmètre esclave et reliée avec ce dernier,
et lequel procédé est exécuté pour au moins l'un des débitmètres esclaves au sein du réseau de distribution et lequel procédé comprend les étapes de procédé suivantes, qui sont exécutées par un ordinateur intégré dans l'unité de communication et d'alimentation du débitmètre esclave concerné, et lequel ordinateur est reliée avec le débitmètre respectif :
• Définition d'une matrice de facteurs d'influence, qui influencent une durée de vie théorique de la batterie, une chute de tension par unité de temps mesurée dans la batterie étant prise en compte comme facteur d'influence et, concernant les facteurs d'influence, il s'agit notamment d'une fréquence de mise en marche du débitmètre esclave concerné, de son cycle de mesure, de son temps de fonctionnement, de la pression et de la température de l'environnement ;
• Saisie assistée par ordinateur des facteurs d'influence, de l'installation de la batterie jusqu'à sa défaillance ou sa fin de vie à des instants prédéfinis en fonction d'un temps de fonctionnement - qui s'est écoulé jusqu'à ce moment-là - du débitmètre esclave concerné ;
• Détermination effectuée par l'ordinateur de la durée de vie théorique en cas de variation de différents facteurs d'influence à l'aide de la matrice, en tenant compte de l'ensemble des facteurs d'influence saisis jusqu'ici et du temps de fonctionnement écoulé ;
• La chute de tension par unité de temps, actuellement mesurée, étant comparée avec une valeur calculée théoriquement pour la configuration concernée du débitmètre esclave et, en cas de dépassement d'un écart prédéfini, génère un signal d'alarme ; et
• Un signal étant généré en cas de dépassement par défaut d'une durée de vie théorique restante prédéfinie, lequel signal indique la nécessité d'un remplacement de la batterie.

2. Procédé selon la revendication 1, **caractérisé en ce que** la durée de vie théorique restante de la batterie est déterminée par l'ordinateur à chaque modification des cycles de mesure du débitmètre esclave.

3. Procédé selon la revendication 1 ou 2, **caractérisé en ce que** la durée de vie théorique restante de la batterie est déterminée périodiquement par l'ordinateur, dans la mesure où, dans l'intervalle, aucune détermination n'a eu lieu en raison de cycles de mesure modifiés du débitmètre esclave.

4. Procédé selon la revendication 1, lequel est utilisé pour la détermination et la configuration d'une durée de vie théorique restante, **caractérisé par** les étapes de procédé suivantes :
• L'ordinateur détermine différentes durées de vie théoriques restantes pour différents couples de valeurs de facteurs d'influence ;
• Les différentes durées de vie théoriques restantes étant affichées, conjointement avec les différents couples de valeurs de facteurs d'influence, pour un utilisateur sur un dispositif d'affichage de l'ordinateur
• Une modification par l'utilisateur des valeurs des couples de valeurs ou des facteurs d'influence sur un dispositif de saisie de l'ordinateur étant rendue possible ;
• L'ordinateur déterminant, après chaque entrée ou modification des couples de valeurs de facteurs d'influence par l'utilisateur, une nouvelle durée de vie théorique restante correspondant aux valeurs modifiées, et les représente sur le dispositif d'affichage de l'ordinateur.

5. Procédé selon la revendication 1, **caractérisé en ce que** l'ordinateur, pour un couple de valeurs de facteurs d'influence, que l'utilisateur sélectionne finalement, utilise les facteurs d'influence, qui concernent un cycle de mesure souhaité du débitmètre esclave ou des débitmètres esclaves, pour la configuration ou le paramétrage du ou des débitmètres esclaves.

6. Procédé selon la revendication 1,
**caractérisé en ce qu'**est déterminée, à partir de plusieurs chutes de tension par unité de temps actuellement mesurées, une tendance qui est comparée avec une valeur calculée théoriquement pour la configuration concernée du ou des débitmètres esclaves et, en cas de dépassement d'un écart prédéfini, un signal d'alarme est généré.
